# EUROPÄISCHE PATENTSCHRIFT

(11) **EP 2 869 034 B1**
(45) Veröffentlichungstag und Bekanntmachung des Hinweises auf die Patenterteilung: **14.12.2016**
(21) Anmeldenummer: 14189498.0
(22) Anmeldetag: 20.10.2014
(51) Int. Cl.: G01B 11/14, G01D 5/38

(54) **Vorrichtung zur Positionsbestimmung**
Position sensing device
Dispositif de détermination de la position

(30) Priorität: 29.10.2013 DE 102013221898
(43) Veröffentlichungstag der Anmeldung: 06.05.2015
(73) Patentinhaber: Dr. Johannes Heidenhain GmbH, 83301 Traunreut (DE)
(72) Erfinder: Huber, Walter, 83278 Traunstein (DE); Holzapfel, Wolfgang, 83119 Obing (DE); Joerger, Ralph, 83278 Traunstein (DE)

(56) Entgegenhaltungen:
- EP-A2- 2 450 673
- WO-A1-89/05964
- DE-A1- 19 908 328

## Beschreibung

### GEBIET DER TECHNIK

Die vorliegende Erfindung betrifft eine Vorrichtung zur Positionsbestimmung entlang einer vertikalen Messrichtung nach dem Oberbegriff von Anspruch 1.

### STAND DER TECHNIK

Neben der Erfassung von Positionsänderungen zweier zueinander beweglicher Objekte in einer lateralen Richtung gibt es Messaufgaben, bei denen ausschließlich oder ggf. zusätzlich noch die Bestimmung des Abstands dieser Objekte in einer hierzu senkrechten, vertikalen Messrichtung erforderlich ist. Für eine hochgenaue Messung entlang einer derartigen Messrichtung bieten sich Vorrichtungen zur interferentiellen Abstandsmessung an, wie sie etwa in der DE 10 2013 203 211.0 der Anmelderin vorgeschlagen werden. Die aus dieser Druckschrift bekannten Vorrichtungen liefern ausgangsseitig hochauflösende phasenverschobene Inkrementalsignale, über die derartige Abstandsänderungen erfasst werden können.

Eine ähnliche Vorrichtung ist ferner aus der EP 2 587 212 A2 bekannt. Dort wird im dritten Ausführungsbeispiel anhand der Figuren 7 - 9 auch eine Möglichkeit zur Herstellung eines Absolutbezugs für die Inkrementalmessung vorgeschlagen. Hierzu gelangt das von einer Lichtquelle emittierte Strahlenbündel über eine Kollimationsoptik, einen Strahlteiler, eine Phasenplatte und eine Fokussieroptik zunächst auf einen entlang der Messrichtung beweglichen Messreflektor. Von diesem wird das Strahlenbündel in Richtung eines Gitters umgelenkt. Das als Reflexionsgitter ausgebildete Gitter lenkt das Strahlenbündel schließlich auf eine Detektoranordnung, bestehend aus zwei benachbart angeordneten und in Differenz verschalteten Detektorelementen. Im Fall einer Bewegung des Messreflektors entlang der Messrichtung erfasst die Detektoranordnung ein Signal, das von der Position des Messreflektors abhängt und aus dem ein Referenzsignal an einer definierten Referenzposition entlang der Messrichtung erzeugbar ist. Auf die derart bestimmte Referenzposition können dann anschließend die hochauflösenden Inkrementalsignale bezogen werden, so dass eine präzise absolute Bestimmung der Position des Messreflektors entlang der vertikalen Messrichtung möglich ist.

Nachteilig an der bekannten Vorrichtung aus der EP 2 587 212 A2 ist jedoch, dass im Fall von Verkippungen des Messreflektors aus seiner Nominallage Fehler bei der Positionsbestimmung resultieren können. Dies liegt daran, dass die sich bei einer Abstandsänderung entlang der vertikalen Messrichtung ändernde Signalphase sich außerdem linear mit dem Verkippwinkel ändert.

### ZUSAMMENFASSUNG DER ERFINDUNG

Der vorliegenden Erfindung liegt das Problem zugrunde, eine Vorrichtung zur hochgenauen Positionsbestimmung entlang einer vertikalen Messrichtung zu schaffen, die möglichst unempfindlich gegenüber Verkippungen des Messreflektors um mindestens eine Verkippachse ist. Insbesondere soll die entlang der Messrichtung zu bestimmende Referenzposition möglichst nur vom vertikalen Abstand und nicht von einer eventuellen Verkippung des Messreflektors abhängen.

Diese Aufgabe wird erfindungsgemäß durch eine Vorrichtung mit den Merkmalen des Anspruchs 1 gelöst.

Vorteilhafte Ausführungen der erfindungsgemäßen Vorrichtung ergeben sich aus den Maßnahmen in den abhängigen Ansprüchen.

Die erfindungsgemäße Vorrichtung zur Positionsbestimmung umfasst eine Lichtquelle, einen planen Messreflektor, der mindestens entlang einer Messrichtung beweglich ist, wobei die Messrichtung senkrecht in Bezug auf den Messreflektor orientiert ist und eine Detektoranordnung. Mindestens ein von der Lichtquelle emittiertes Strahlenbündel trifft nach dem Beaufschlagen des Messreflektors auf die Detektoranordnung, so dass im Fall einer Bewegung des Messreflektors entlang der Messrichtung mindestens ein Signal resultiert, das von der Position des Messreflektors abhängt und aus dem ein Referenzsignal an einer definierten Referenzposition erzeugbar ist. Das Strahlenbündel beaufschlagt den Messreflektor zweimal und durchläuft zwischen dem Beaufschlagen des Messreflektors eine Umlenkeinheit, die derart ausgebildet ist, dass eine durch eine Messreflektorverkippung nach der ersten Reflexion resultierende Strahlrichtungsabweichung des Strahlenbündels nach der zweiten Reflexion kompensiert ist.

Mit Vorteil umfasst dabei die Umlenkeinheit ein oder mehrere optische Bauelemente und ist derart ausgebildet, dass ein unter dem Winkel Θ gegen die Normale auf den unverkippten Messreflektor erstmalig einfallendes Strahlenbündel im Fall einer Verkippung des Messreflektors um eine Verkippachse um den Winkel α nach dem Durchlaufen der Umlenkeinheit unter dem Winkel Θ - 2α gegen die Normale auf den unverkippten Messreflektor ein zweites Mal auf den Messreflektor einfällt.

Es kann vorgesehen sein, dass die Umlenkeinheit ein oder mehrere optische Bauelemente umfasst, die
- entweder auf ein auf den Messreflektor einfallendes divergentes Strahlenbündel eine konvergierende optische Wirkung ausüben oder
- auf ein auf den Messreflektor einfallendes konvergentes Strahlenbündel eine divergierende optische Wirkung ausüben.

Dabei ist es möglich, dass das mindestens eine optische Bauelement als refraktives oder diffraktives optisches Element ausgebildet ist.

Ferner kann die Umlenkeinheit als diffraktive optische Elemente ein erstes und ein zweites Umlenkgitter umfassen.

Es ist möglich, dass die Umlenkeinheit ein oder mehrere optische Bauelemente umfasst und derart ausgebildet ist, dass in der Einfallsebene eine spiegelsymmetrische Abbildung des erstmalig auf den Messreflektor einfallenden Strahlenbündels auf das vom Messreflektor nach der zweiten Reflexion weg propagierende Strahlenbündel erfolgt.

Mit Vorteil ist entlang des Strahlengangs des Strahlenbündels zwischen der Lichtquelle und der Umlenkeinheit ein erstes Transmissionsgitter angeordnet und zwischen der Umlenkeinheit und der Detektoranordnung ein zweites Transmissionsgitter angeordnet.

Dabei kann vorgesehen sein, dass die beiden Transmissionsgitter, die Umlenkeinheit und der Messreflektor derart relativ zueinander angeordnet sind, dass das Strahlenbündel zwischen dem Durchlaufen des ersten und zweiten Transmissionsgitters den Messreflektor an zwei Auftrefforten beaufschlagt, welche entlang einer ersten Richtung voneinander beabstandet sind, die parallel zur Einfallsrichtung des Strahlenbündels auf das erste Transmissionsgitter orientiert ist.

Zudem ist es möglich, dass die Lichtquelle, die Transmissionsgitter, die Umlenkeinheit und die Detektoranordnung in einer Abtasteinheit angeordnet sind, die gegenüber dem Messreflektor entlang der Messrichtung beweglich angeordnet ist.

Desweiteren können die Transmissionsgitter in der Abtasteinheit an orthogonal zum Messreflektor orientierten Trägerelementen angeordnet sein, wobei
- das erste Transmissionsgitter an einem ersten Trägerelement angeordnet ist,
- das zweite Transmissionsgitter an einem zweiten Trägerelement angeordnet ist und
- die beiden Umlenkgitter auf den gegenüberliegenden Seiten eines transparenten dritten Trägerelements angeordnet sind, das plattenförmig ausgebildet und zwischen dem ersten und zweiten Trägerelement angeordnet ist.

Es ist ferner möglich, dass
- das von der Lichtquelle emittierte Strahlenbündel über das erste Transmissionsgitter ein erstes Mal in Richtung des Messreflektors umgelenkt wird,
- am Messreflektor eine Reflexion des Strahlenbündels in Richtung der Umlenkeinheit erfolgt,
- über die Umlenkeinheit das Strahlenbündel ein zweites Mal in Richtung des Messreflektors umgelenkt wird,
- am Messreflektor eine Reflexion des Strahlenbündels in Richtung des zweiten Transmissionsgitters erfolgt und
- über das zweite Transmissionsgitter eine Umlenkung des Strahlenbündels in Richtung der Detektoranordnung erfolgt.

Dabei kann vorgesehen sein, dass
- das erste Transmissionsgitter ferner derart ausgebildet ist, dass das darauf einfallende kollimierte Strahlenbündel in ein Strahlenbündel überführt wird, das in einer xz-Ebene, die durch die erste Richtung und die Messrichtung aufgespannt wird, divergent ist und
- das erste Umlenkgitter ferner derart ausgebildet ist, dass das darauf einfallende Strahlenbündel
   - in der xz-Ebene kollimiert wird,
   - in einer xy-Ebene, die durch die erste Richtung und eine hierzu senkrechte zweite Richtung aufgespannt wird, eine Ablenkung erfährt und
   - in der xy-Ebene auf einen linienförmigen Fokus fokussiert wird, der sich mittig in der Umlenkeinheit zwischen dem ersten und dem zweiten Umlenkgitter befindet und parallel zur Messrichtung erstreckt und
- das zweite Umlenkgitter ferner derart ausgebildet ist, dass das darauf einfallende Strahlenbündel
   - in der xz-Ebene eine Ablenkung erfährt,
   - in der xz-Ebene in ein konvergierendes Strahlenbündel überführt wird und
   - in der xy-Ebene kollimiert wird,
- das zweite Transmissionsgitter ferner derart ausgebildet ist, dass die die mittlere Strahlrichtung des darauf einfallenden Strahlenbündels parallel zu einer Normalen auf die Transmissionsgitter ausgerichtet wird.

Desweiteren ist es möglich, dass
- das erste Transmissionsgitter ferner derart ausgebildet ist, dass das darauf einfallende kollimierte Strahlenbündel in einer xz-Ebene, die durch die erste Richtung und die Messrichtung aufgespannt wird, die Lichtquelle auf einen ersten Bildpunkt abbildet, der zwischen dem ersten Transmissionsgitter und dem Messreflektor liegt, so dass ein in der xz-Ebene divergierendes Strahlenbündel auf das erste Umlenkgitter einfällt,
- das erste Umlenkgitter ferner derart ausgebildet ist, dass das darauf einfallende Strahlenbündel
   - in der xz-Ebene kollimiert wird,
   - in einer xy-Ebene, die durch die erste Richtung und eine hierzu senkrechte zweite Richtung aufgespannt wird, eine Ablenkung erfährt und
   - in der xy-Ebene auf einen linienförmigen Fokus fokussiert wird, der sich mittig in der Umlenkeinheit zwischen dem ersten und zweiten Umlenkgitter befindet und parallel zur Messrichtung erstreckt und
- das zweite Umlenkgitter ferner derart ausgebildet ist, dass das darauf einfallende Strahlenbündel
   - in der xz-Ebene eine Ablenkung erfährt,
   - in der xz-Ebene die Lichtquelle auf einen zweiten Bildpunkt zwischen dem Messreflektor und dem zweiten Transmissionsgitter abbildet, so dass ein in der xz-Ebene divergierendes Strahlenbündel auf das zweite Transmissionsgitter einfällt und
   - in der xy-Ebene kollimiert wird,
- das zweite Transmissionsgitter ferner derart ausgebildet ist, dass darüber eine Abbildung des zweiten Bildpunkts in eine Detektionsebene der Detektoranordnung erfolgt.

Es ist möglich, dass das erste Transmissionsgitter derart ausgebildet ist, dass darüber eine Abspaltung eines Referenzstrahlenbündels erfolgt, welches am zweiten Transmissionsgitter mit demjenigen Strahlenbündel zur interferierenden Überlagerung gebracht wird, das zweimal den Messreflektor beaufschlagt.

Die Transmissionsgitter und/oder die Umlenkgitter können als geblazte Gitter ausgebildet sein.

Als maßgeblicher Vorteil der erfindungsgemäßen Lösung resultiert eine hohe Unempfindlichkeit gegenüber Verkippungen des Messreflektors um mindestens eine Verkippachse. Fehler bei der Positionsbestimmung bzw. bei der Erzeugung des Referenzsignals lassen sich damit zuverlässig vermeiden. Darüber hinaus kann über weitere Maßnahmen sichergestellt werden, dass auch eine Unempfindlichkeit der Positionsbestimmung bezüglich Verkippungen um eine weitere Verkippachse gewährleistet ist. Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

### KURZE BESCHREIBUNG DER ZEICHNUNGEN

Es zeigt
- Figur 1a: eine schematisierte erste Schnittansicht eines ersten Ausführungsbeispiels der erfindungsgemäßen Vorrichtung;
- Figur 1b: eine schematisierte zweite Schnittansicht des ersten Ausführungsbeispiels der erfindungsgemäßen Vorrichtung;
- Figur 1c: eine schematisierte Teil-Strahlengang-Darstellung zur Erläuterung einer maßgeblichen Komponente der erfindungsgemäßen Vorrichtung;
- Figur 2a - 2c: jeweils eine Draufsicht auf Trägerelemente des ersten Ausführungsbeispiels mit den darauf angeordneten Transmissionsgittern;
- Figur 3: die Detektorelemente inklusive nachgeordneter Schaltungsanordnung zur Erzeugung des Referenzsignals des ersten Ausführungsbeispiels;
- Figur 4a - 4e: verschiedene Signaldarstellungen zur Erläuterung der Referenzsignalerzeugung im ersten Ausführungsbeispiel mit der Schaltungsanordnung aus Figur 3;
- Figur 5a: eine schematisierte erste Schnittansicht eines zweiten Ausführungsbeispiels der erfindungsgemäßen Vorrichtung;
- Figur 5b: eine schematisierte zweite Schnittansicht des zweiten Ausführungsbeispiels der erfindungsgemäßen Vorrichtung;
- Figur 6: eine schematisierte Schnittansicht eines dritten Ausführungsbeispiels der erfindungsgemäßen Vorrichtung.

### BESCHREIBUNG DER AUSFÜHRUNGSFORMEN

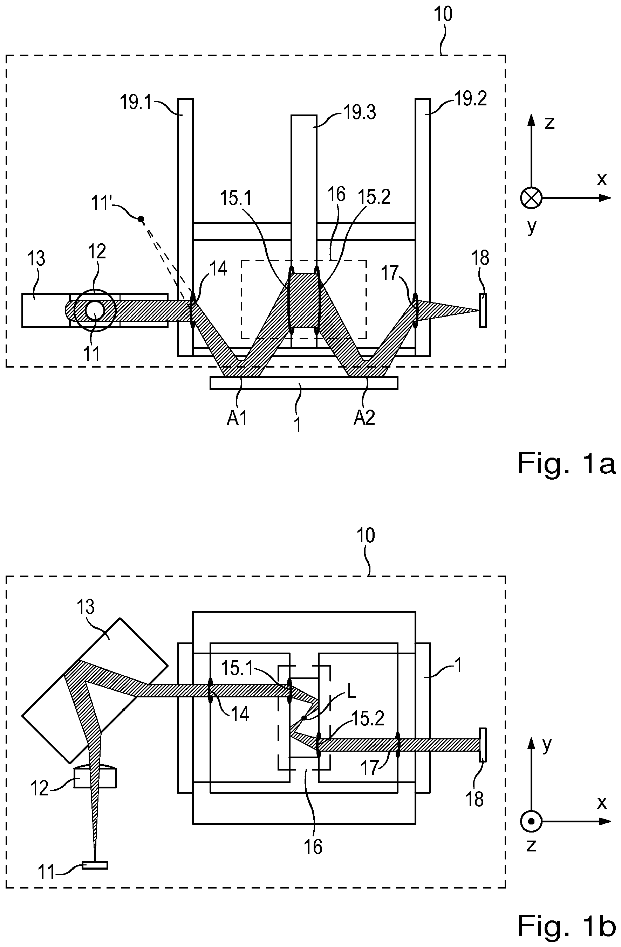

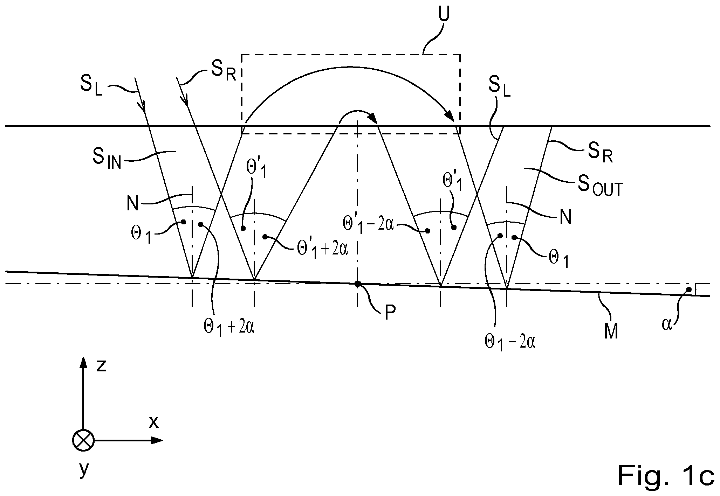

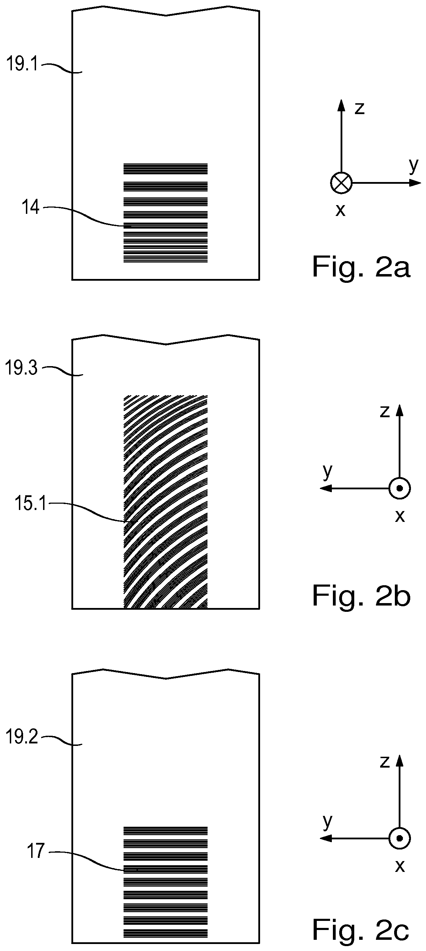

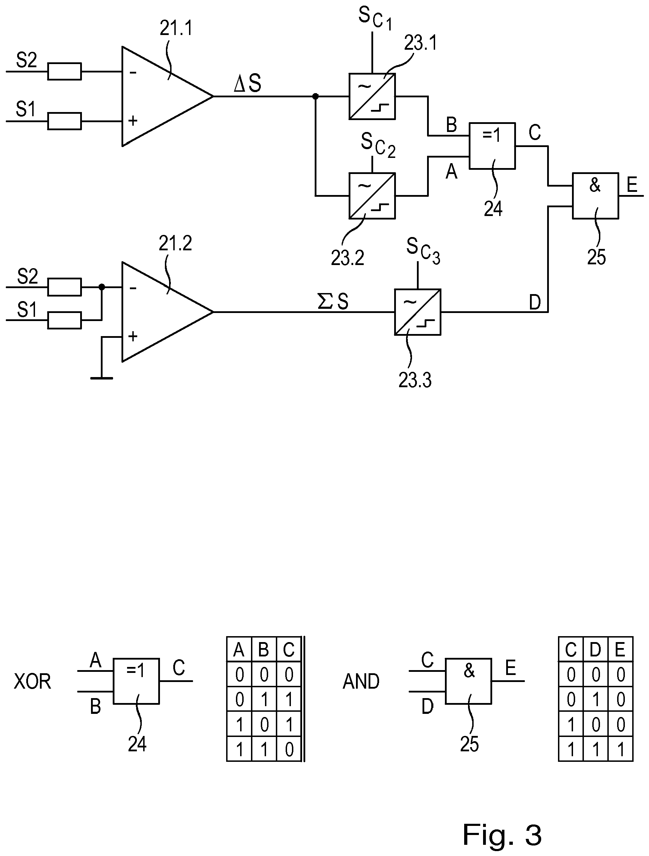

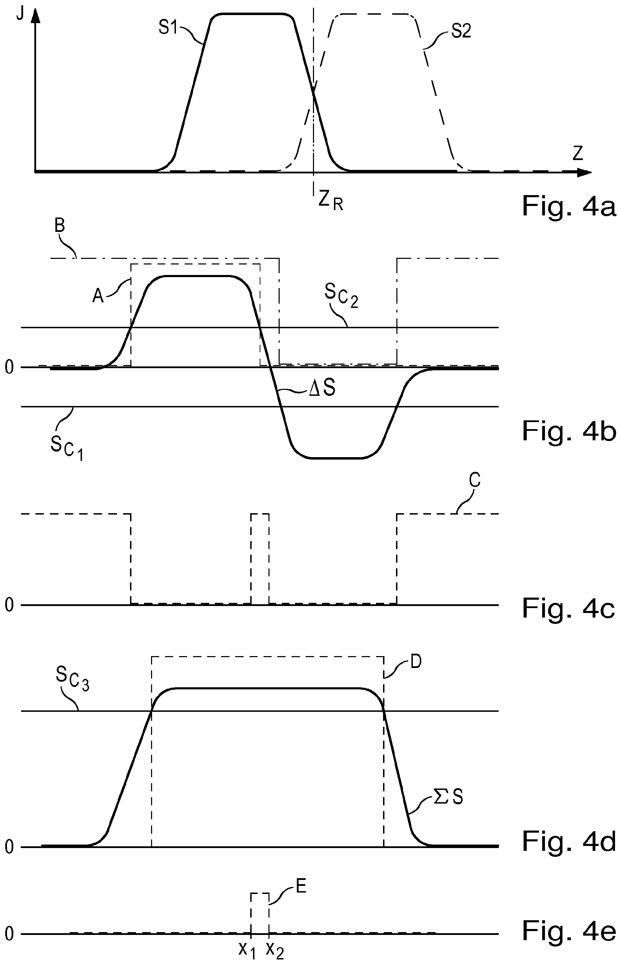

Anhand der Figuren 1a - 1c, 2a - 2c, 3 sowie 4a - 4c wird nachfolgend ein erstes Ausführungsbeispiel der erfindungsgemäßen Vorrichtung zur Positionsbestimmung sowie diverse grundsätzliche Aspekte derselbigen im Detail beschrieben. Die Figuren 1a und 1b zeigen jeweils eine schematisierte Darstellung des Strahlengangs dieses Ausführungsbeispiels in unterschiedlichen Ansichten, Figur 1c eine schematisierte Teil-Strahlengang-Darstellung zur Erläuterung bestimmter geometrischer Zusammenhänge und die Figuren 2a - 2c jeweils Draufsichten auf Trägerelemente dieser Vorrichtung mit den darauf angeordneten Transmissionsgittern. In Figur 3 ist eine Schaltungsanordnung zur Erzeugung eines Referenzsignals S_{R} mit der Vorrichtung aus den vorhergehenden Figuren dargestellt, in den Figuren 4a - 4c sind verschiedene Signaldarstellungen zur Erläuterung der Referenzsignalerzeugung gezeigt.

Nicht in den Figuren dargestellt ist aus Gründen der besseren Übersichtlichkeit jeweils der Strahlengang zur interferentiellen Erzeugung von inkrementellen Abstandssignalen, wie dies in der bereits eingangs erwähnten DE 10 2013 203 211.0 der Anmelderin vorgeschlagen wird. Im Folgenden wird demzufolge ausschließlich die erfindungsgemäße Erzeugung eines Referenzsignals S_{R} erläutert. Dieses kann dann in bekannter Art und Weise mit den hochauflösenden inkrementellen Abstandssignalen verrechnet werden, die gemäß der DE 10 2013 203 211.0 erzeugt werden.

Die erfindungsgemäße Vorrichtung umfasst einen planen Messreflektor 1 sowie eine Reihe weiterer Komponenten 11 - 19.3, die im dargestellten Ausführungsbeispiel in einer schematisiert angedeuteten Abtasteinheit 10 angeordnet sind. Der plane Messreflektor 1 erstreckt sich in einer Ebene entlang einer ersten Richtung x und einer zweiten, hierzu senkrechten Richtung y. Nachfolgend sei diese Ebene auch als Anordnungsebene des Messreflektors oder xy-Ebene bezeichnet. Die xy-Ebene ist in Figur 1a senkrecht zur Zeichenebene, d.h. zur xz-Ebene, orientiert; in Figur 1b ist die Anordnungsebene des Messreflektors 1 parallel zur Zeichenebene, d.h. parallel zur xy-Ebene, orientiert.

Zu den in der Abtasteinheit 10 vorgesehenen Komponenten 11 - 19.3 gehören im dargestellten Ausführungsbeispiel eine Lichtquelle 11, eine Kollimatoroptik 12, eine Glasplatte 13, eine Detektoranordnung 18 sowie drei Trägerelemente 19.1 - 19.3, an denen zwei Transmissionsgitter 14, 17 sowie zwei Umlenkgitter 15.1, 15.2 einer Umlenkeinheit 16 mit definierten optischen Wirkungen angeordnet sind, die nachfolgend noch im Detail erläutert werden.

Der plane Messreflektor 1 ist gegenüber der Abtasteinheit 10 bzw. gegenüber zumindest einem Teil der anderen Komponenten 11 - 19.3 mindestens entlang einer vertikalen Messrichtung beweglich angeordnet. Die vertikale Messrichtung ist senkrecht in Bezug auf den planen Messreflektor 1 bzw. dessen xy-Anordnungsebene orientiert und wird in den Figuren jeweils mit der Koordinate z bezeichnet; nachfolgend sei hierbei auch von der Messrichtung z die Rede. Beispielsweise können der Messreflektor 1 einerseits und die Abtasteinheit 10 andererseits mit - nicht dargestellten - Maschinenkomponenten verbunden sein, die u.a. entlang der Messrichtung z gegeneinander beweglich sind. Über die erfindungsgemäße Vorrichtung zur Positionsbestimmung wird im Fall der Relativbewegung des Messreflektors 1 gegenüber der Abtasteinheit 10 mindestens ein Signal erzeugt, das von der Position des Messreflektors 1 entlang der Messrichtung z abhängt. Aus dem derart erzeugten Signal kann dann ein Referenzsignal S_{R} an einer definierten Referenzposition z_{REF} entlang der Messrichtung z erzeugt bzw. abgeleitet werden, das von einer nachgeordneten - nicht dargestellten - Maschinensteuerung weiterverarbeitet wird, beispielsweise in Form einer Verrechnung mit den erzeugten inkrementellen Abstandssignalen etc..

Alternativ zur Anordnung aller Komponenten 11 - 19.3 in einer gemeinsamen Abtasteinheit 10 kann im Rahmen der vorliegenden Erfindung z.B. auch vorgesehen sein, die Lichtquelle 1 und/oder die Detektoranordnung 18 örtlich getrennt von der Abtasteinheit 10 anzuordnen und diese jeweils über Lichtwellenleiter mit der Abtasteinheit 10 zu verbinden. Dies ist etwa dann vorteilhaft, wenn am Messort kein Wärmeeintrag durch die Lichtquelle erwünscht ist oder wenn die Detektoranordnung möglichst nicht durch Einflüsse am Messort gestört werden soll.

Der im vorliegenden ersten Ausführungsbeispiel der erfindungsgemäßen Vorrichtung vorgesehene Abtaststrahlengang zur Erzeugung eines Referenzsignals S_{R} wird nachfolgend im Detail erläutert.

Eine Lichtquelle 11, beispielsweise ausgebildet als punktförmiger bzw. nahezu punktförmiger Halbleiterlaser oder als LED, emittiert ein Strahlenbündel, das von einer Kollimatoroptik 11 kollimiert wird. Das kollimierte Strahlenbündel wird über eine Reflexion an der Rückseite einer unter 45° im Strahlengang angeordneten Glasplatte 13 in Richtung eines ersten Transmissionsgitters 14 umgelenkt. Das erste Transmissionsgitter 14 ist an einem ersten Trägerelement 19.1 angeordnet, das als transparente Glasplatte ausgebildet und orthogonal bzgl. des Messreflektors 1 bzw. orthogonal zur xy-Ebene angeordnet ist. In Figur 1a erstreckt sich das erste Trägerelement 19.1 somit senkrecht zur Zeichenebene in der yz-Ebene.

Das erste Transmissionsgitter 14 übt verschiedene optische Wirkungen auf das darauf einfallende kollimierte Strahlenbündel aus und ist hierzu geeignet ausgebildet. So bewirkt es zum einen eine Umlenkung des Strahlenbündels dergestalt, dass dieses ein erstes Mal in Richtung des Messreflektors 1 umgelenkt wird. Diese Umlenkung erfolgt wie aus Figur 1a ersichtlich in der xz-Ebene. Zum anderen besitzt das erste Transmissionsgitter 14 eine Zylinderlinsenfunktion mit negativer Brennweite, so dass das einfallende kollimierte Strahlenbündel in ein Strahlenbündel überführt wird, das lediglich in der xz-Ebene divergent ist, in der xy-Ebene gemäß Figur 1b aber nach wie vor kollimiert weiterpropagiert.

Diese unterschiedlichen optischen Funktionen lassen sich in einem einzigen Transmissionsgitter durch die Summierung der Phasenfunktionen der einzelnen optischen Funktionalitäten kombinieren, so dass eine aus Einzel-Phasenfunktionen überlagerte Gesamt-Gitterphasenfunktion des ersten Transmissionsgitters 14 resultiert. Im Fall der Realisierung als binäre Gitterstruktur wird die überlagerte Gesamt-Gitterphasenfunktion binarisiert, womit die Lage und Form der Gitterstege des ersten Transmissionsgitters 14 festgelegt ist. Vorzugsweise ist das erste Transmissionsgitter 14 als geblaztes Gitter ausgebildet, bei dem unerwünschte Beugungsordnungen minimiert sind; dabei handelt es sich etwa um diejenigen Beugungsordnungen, die sich ausgehend vom ersten Transmissionsgitter 14 in der xz-Ebene in positiver z-Richtung ausbreiten.

Das über das erste Transmissionsgitter 14 wie erläutert beeinflusste, teildivergente Strahlenbündel gelangt sodann ein erstes Mal an einem ersten Auftreffort A1 auf den Messreflektor 1 und wird von dort in Richtung der Abtasteinheit 10 bzw. in Richtung des ersten Umlenkgitters 15.1 einer Umlenkeinheit 16 reflektiert. Das erste Umlenkgitter 15.1 ist hierbei ebenfalls als Transmissionsgitter ausgebildet und an einer ersten Seite eines dritten Trägerelements 19.3 in der Abtasteinheit 10 angeordnet; das dritte Trägerelement 19.3 ist wie das erste Trägerelement 19.1 als transparente Glasplatte, die sich in der yz-Ebene senkrecht zum Messreflektor 1 erstreckt, ausgebildet.

Das erste Umlenkgitter 15.1, ausgebildet als Transmissionsgitter, übt verschiedene, definierte optische Wirkungen auf das darauf einfallende Strahlenbündel aus; es besitzt hierbei ebenfalls eine bestimmte Zylinderlinsenwirkung. So resultiert darüber eine Umlenkung des einfallenden Strahlenbündels in Richtung eines zweiten Umlenkgitters 15.2 der Umlenkeinheit 16, das an der gegenüberliegenden zweiten Seite des dritten Trägerelements 19.3 angeordnet und ebenfalls als Transmissionsgitter ausgebildet ist. Hierbei erfolgt in der xz-Ebene wie aus Figur 1a ersichtlich eine Kollimation des Strahlenbündels. Desweiteren resultiert aufgrund der entsprechenden Ausbildung des ersten Umlenkgitters 15.1 gemäß Figur 1b eine Ablenkung in der xy-Ebene sowie nach einer Reflexion an der gegenüberliegenden zweiten Seite des dritten Trägerelements 19.3 eine Fokussierung in der xy-Ebene auf einen linienförmigen Fokus L. Der linienförmige Fokus L befindet sich mittig im dritten Trägerelement 19.3 und erstreckt sich parallel zur Messrichtung z.

Ab dem linienförmigen Fokus L propagiert das Strahlenbündel anschließend in der xy-Ebene wie aus Figur 1b ersichtlich punktsymmetrisch in Bezug auf den linienförmigen Fokus L in Richtung des zweiten Umlenkgitters 15.2 weiter. Dies bedeutet, dass nach der Reflexion an der ersten Seite des dritten Trägerelements 19.3 das in der xy-Ebene wieder divergente Strahlenbündel auf das zweite Umlenkgitter 15.2 auftrifft. Das zweite Umlenkgitter 15.2 ist gegenüberliegend zum ersten Umlenkgitter 15.1 auf der zweiten Seite des dritten Trägerelements 19.3 angeordnet und in der optischen Funktion bezüglich der xz-Ebene spiegelsymmetrisch, in der jeweiligen Draufsicht wie in Figur 2b jedoch identisch zum ersten Umlenkgitter 15.1 der Umlenkeinheit 16 ausgebildet. Somit bewirkt das zweite Umlenkgitter 15.2 mit seiner Zylinderlinsenfunktion nunmehr zum einen gemäß Figur 1a eine Umlenkung des darauf einfallenden Strahlenbündels dergestalt, dass dieses ein zweites Mal in Richtung des Messreflektors 1 umgelenkt wird, d.h. es resultiert zum einen eine Ablenkung in der xz-Ebene. Zum anderen wird das Strahlenbündel darüber in der xz-Ebene wie aus Figur 1a ersichtlich über das zweite Umlenkgitter 15.2 in ein konvergierendes Strahlenbündel überführt und gemäß Figur 1b in der xy-Ebene kollimiert.

Nach dem zweiten Beaufschlagen des Messreflektors 1 am zweiten Auftreffort A2, der in x-Richtung beabstandet zum ersten Auftreffort A1 ist, trifft das entsprechend beeinflusste Strahlenbündel schließlich auf das am zweiten Trägerelement 19.2 angeordnete zweite Transmissionsgitter 17. Das zweite Trägerelement 19.2 ist wiederum ausgebildet wie die beiden anderen Trägerelemente 19.1, 19.3. Über das zweite Transmissionsgitter 17 wird eine Umlenkung des darauf einfallenden Strahlenbündels in Richtung der nachgeordneten Detektoranordnung 18 bewirkt sowie eine Ausrichtung der mittleren Strahlrichtung des darauf einfallenden Strahlenbündels parallel zu einer Normalen auf die durchlaufenen Transmissionsgitter 14, 17 und Umlenkgitter 15.1, 15.2.

Die beiden Umlenkgitter 15.1, 15.2 sowie das zweite Transmissionsgitter 17 können im Übrigen analog zum ersten Transmissionsgitter 14 als geblazte Gitter ausgebildet werden.

Das grundsätzliche Wirkungsprinzip der erfindungsgemäßen Vorrichtung, die auf dem erläuterten Strahlengang basiert, lässt sich wie folgt erläutern. So kann in einer alternativen Strahlengangdarstellung von einer virtuellen Lichtquelle 11' ausgegangen werden, die sich wie in Figur 1a gezeigt im Strahlenverlauf vor dem ersten Transmissionsgitter 14 befindet. In der xz-Ebene breitet sich gemäß Figur 1a von der virtuellen Lichtquelle 11' ein divergentes Strahlenbündel aus. Es wird in dieser xz-Ebene aufgrund der vorgesehenen Zylinderlinsenwirkungen der beiden Umlenkgitter 15.1, 15.2 auf das Strahlenbündel die virtuelle Lichtquelle 11' auf die Detektoranordnung 18 bzw. in dessen Detektionsebene abgebildet. Vor dem Beaufschlagen des ersten Umlenkgitters 15.1 trifft das Strahlenbündel dabei ein erstes Mal am Auftreffort A1 und nach dem Durchlaufen des zweiten Umlenkgitters 15.2 am Auftreffort A2 ein zweites Mal auf den Messreflektor 1. Alle Strahlenbündel, die zu der Kombination der beiden Umlenkgitter 15.1, 15.2 auf dem gemeinsamen Trägerelement 19.3 hin propagieren und auch von dieser weiter propagieren, werden über den Messreflektor 1 geleitet. Der Messreflektor 1 definiert daher ein Bild der Umlenkgitter 15.1 und 15.2, an dem diese scheinbar positioniert sind. Im Fall einer Verschiebung des Messreflektors 1 um den Betrag Δz entlang der Messrichtung z verschiebt sich dieses Bild um den Betrag 2·Δz. Das bedeutet, dass die in den Umlenkgittern 15.1, 15.2 enthaltenen Zylinderlinsenwirkungen um den Betrag 2·Δz verschoben werden und die virtuelle Lichtquelle 11' entsprechend entlang der Messrichtung z um den Betrag 4·Δz verschoben auf die Detektoranordnung 18 abbilden.

Anhand der Figuren 3 sowie 4a - 4d sei nachfolgend die Erzeugung des Referenzsignals aus den über die Detektoranordnung 18 derart erfassten Signalen erläutert.

Die Detektoranordnung umfasst im vorliegenden Ausführungsbeispiel zwei in Messrichtung z benachbart angeordnete Detektorelemente, die die Signale S1, S2 liefern, deren Verlauf im Bereich der Referenzposition in Figur 4a gezeigt ist. Aus den beiden Signalen S1, S2 wird über ein Differenzelement 21.1 ein Differenzsignal ΔS gebildet und über ein Additionselement 21.2 ein Summensignal ∑S. Der Verlauf des Differenzsignals ΔS und des Summensignals ∑S ist in den Figuren 4b und 4d gezeigt. Das Summensignal ∑S ist wie aus Figur 4d ersichtlich bei einer z-Verschiebung des Messreflektors nur in einem Teil des Messbereichs näherungsweise konstant. In diesem Teilbereich ist das Summensignal ∑S groß und dient als Referenzpegel.

Das Differenzsignal ΔS wird parallel zwei Komparatorstufen 23.1, 23.2 zugeführt, die es mit etwas unterschiedlichen Schwellwerten S_{C1} bzw. S_{C2} vergleichen, die jeweils aus dem Summensignal ∑S durch Spannungsteiler gewonnen werden. Durch die unterschiedlichen Schwellwerte S_{C1} und S_{C2} sind die entsprechenden Schaltpositionen x1 und x2 der beiden Komparatorstufen 23.1, 23.2 etwas zueinander verschoben. Eine XOR-Verknüpfung der an den Komparatorstufen-Ausgängen resultierenden Rechteck-Signale A, B über das XOR-Element 24 liefert das in Figur 4c gezeigte Signal C; im unteren Teil der Figur 3 ist die zugehörige Logiktabelle des XOR-Elements 24 gezeigt.

Das Summensignal ∑S wird gemäß Figur 3 einer weiteren Komparatorstufe 23.3 zugeführt und dort mit dem Schwellwert S_{C3} verglichen. Am Ausgang der Komparatorstufe 23.3 resultiert schließlich das Rechtecksignal D, das in Figur 4d gezeigt ist.

Die derart erzeugten Signale C und D werden dann schließlich einem UND-Element 25 zugeleitet, an dessen Ausgang nach der entsprechenden logischen Verknüpfung das Referenzsignal E resultiert, das in Figur 4e dargestellt ist; auch zum UND-Element 25 ist im unteren Teil von Figur 3 die zugehörige Logiktabelle gezeigt.

Die Lage und Breite des ausgegebenen Referenzsignals E kann durch eine elektronische Einstellung der beiden Schwellwerte S_{C1} und S_{C2} in weiten Grenzen gewählt werden. Vorteilhaft ist eine Breite x2-x1, die der Signalperiode der Inkrementalabtastung entspricht. Das bedeutet, dass das Referenzsignal E innerhalb eines Verschiebebereichs des Messreflektors 1 in Messrichtung z eine Referenzposition anzeigt, die eine Signalperiode der Inkrementalabtastung breit ist. Damit lässt sich eindeutig eine Signalperiode der Inkrementalabtastung referenzieren, wobei beispielsweise der Wert des Inkrementalzählers dort auf null gesetzt wird.

Über die erfindungsgemäße Vorrichtung kann nunmehr in besonders vorteilhafter Art und Weise der Einfluss von Verkippungen des Messreflektors 1 auf die Messgenauigkeit minimiert werden. Derartige Verkippungen können etwa aufgrund von nicht eingehaltenen Montagetoleranzen beim Anbau in der jeweiligen Anwendung resultieren.

Die Unempfindlichkeit gegenüber Verkippungen des Messreflektors 1 um die erste Richtung y wird in der erfindungsgemäßen Vorrichtung zum einen dadurch sichergestellt, dass das Strahlenbündel aufgrund der gewählten Strahlengangführung zweimal den Messreflektor 1 beaufschlagt; zum anderen gewährleistet die geeignet ausgebildete Umlenkeinheit 16, dass eine durch eine Messreflektorverkippung nach der ersten Reflexion resultierende Strahlrichtungsabweichung des Strahlenbündels nach der zweiten Reflexion kompensiert wird. Darüber wird eine mögliche Verschiebung des auf die Detektoranordnung auftreffenden Strahlenbündels minimiert, wenn der Messreflektor 1 um eine Verkippachse verkippt wird, die sich in y-Richtung erstreckt. In diesem Zusammenhang sei auf Figur 1c verwiesen, mit deren Hilfe diese Zusammenhänge veranschaulicht werden sollen.

In Figur 1c ist der Messreflektor M der erfindungsgemäßen Vorrichtung in einer bezüglich der y-Achse um den Winkel α verkippten Lage gezeigt; strichliniert ist die Nominallage des Messreflektors M ohne Verkippung angedeutet. Dargestellt ist ein auf den Messreflektor M einfallendes divergentes oder ggf. teildivergentes Strahlenbündel S_{IN} bzw. dessen seitlich begrenzende Randstrahlen S_{L}, S_{R} sowie die erste Reflexion am Messreflektor M. Nur schematisch angedeutet ist das Durchlaufen des Strahlenbündels durch die nicht näher detaillierte Umlenkeinheit U sowie die zweite Reflexion des Strahlenbündels am Messreflektor M und das vom Messreflektor schließlich wegpropagierende, konvergente oder ggf. teilkonvergente Strahlenbündel S_{OUT}.

Wie aus Figur 1c ersichtlich, fällt der linke Randstrahl S_{L} des einfallenden divergenten Strahlenbündels S_{IN} unter dem Winkel Θ₁ und der rechte Randstrahl S_{R} unter dem Winkel Θ₁' gegen eine Normale N auf den verkippten Messreflektor. Die Normale N steht hierbei senkrecht auf dem unverkippten Messreflektor M. Nach der ersten Reflexion des einfallenden Strahlenbündels S_{IN} am Messreflektor M propagieren die reflektierten Randstrahlen S_{L}, S_{R} unter den Winkeln Θ₁ + 2α bzw. Θ₁'+ 2α in Richtung der Umlenkeinheit U. Das einfallende Strahlenbündel S_{IN} erfährt durch die Messreflektorverkippung demzufolge nach der ersten Reflexion eine Strahlrichtungsabweichung 2α gegenüber dem Fall des unverkippten Messreflektors M. Wie in Figur 1c angedeutet, ist die Umlenkeinheit U nunmehr derart ausgebildet, dass diese Strahlrichtungsabweichung nach der zweiten Reflexion des Strahlenbündels am Messreflektor M kompensiert ist. Über die entsprechende optische Auslegung der Umlenkeinheit U ist dabei gewährleistet, dass der linke Randstrahl S_{L} des Strahlenbündels nach dem Durchlaufen der Umlenkeinheit U unter dem Winkel Θ₁ - 2α zur Normalen N auf den verkippten Messreflektor M einfällt und der rechte Randstrahl S_{R} unter dem Winkel Θ₁'- 2α. Es erfolgt demnach über die Umlenkeinheit U in der Einfallsebene in der Einfallsebene eine spiegelsymmetrische Abbildung des erstmalig auf den Messreflektor M einfallenden Strahlenbündels S_{IN} auf das vom Messreflektor M nach der zweiten Reflexion weg propagierende bzw. austretende Strahlenbündel S_{OUT}.

Eine solche Funktion der Umlenkeinheit U resultiert durch die Abbildung mittels einer oder mehrerer Zylinderlinsen in y-Richtung, die das eintretende divergente (konvergente) Lichtbündel in ein austretendes konvergentes (divergentes) Lichtbündel umwandelt, das spiegelsymmetrisch oder nahezu spiegelsymmetrisch zu einer yz-Ebene durch den Drehpunkt P austritt. Gemäß Figur 1a erfolgt diese Abbildung durch die beiden Zylinderlinsenfunktionen in y-Richtung der Umlenkgitter 15.1 und 15.2, die vorzugsweise dieselbe Brennweite aufweisen und in x-Richtung symmetrisch zum Drehpunkt P des Messreflektors 1 angeordnet sind. In der Brennebene der ersten Zylinderlinse muss dabei die virtuelle Lichtquelle 11' liegen. Der Drehpunkt P des Messreflektors 1 ist hier als der effektive Messpunkt der erfindungsgemäßen Vorrichtung zur Positionsbestimmung definiert, bei der eine Kippung des Messreflektors 1 in linearer Näherung keine Verschiebung der Referenzsignale hervorruft. Dieser effektive Messpunkt sollte mit dem effektiven Messpunkt der nicht dargestellten Inkrementalabtastung übereinstimmen, damit die exakte Zuordnung der Referenzsignale zu den Inkrementalsignalen auch bei kleinen Kippungen des Messreflektors 1 erhalten bleibt. Der effektive Messpunkt bzw. Drehpunkt P wird vorzugsweise so gewählt, dass er in der Mitte zwischen den beiden Auftrefforten A1 und A2 der Strahlenbündel auf dem Messreflektor 1 liegt. Bei einer derartigen Auslegung der Umlenkeinheit U treten die Randstrahlen S_{R} und S_{L}, wie oben beschrieben, unter den Winkeln Θ₁ - 2α bzw. Θ₁' - 2α zur Normalen N aus.

Nach der zweiten Reflexion des Strahlenbündels am Messreflektor M verlässt das Strahlenbündel S_{OUT} bzw. dessen begrenzende Randstrahlen S_{L}, S_{R} somit unter den Winkeln Θ₁ bzw. Θ₁' den verkippten Messreflektor M in Richtung des hier nicht gezeigten zweiten Transmissionsgitters; die Randstrahlen S_{L}, S_{R} des Strahlenbündels S_{OUT} haben somit die gleichen Richtungen wie die Randstrahlen S_{L}, S_{R} des einfallenden Strahlenbündels S_{IN}. Über das zweimalige Beaufschlagen des Messreflektors M und die geeignete Ausbildung der Umlenkeinheit U lassen sich somit Messfehler aufgrund einer Verkippung des Messreflektors M um eine Achse parallel zur y-Richtung vermeiden oder zumindest minimieren, die ansonsten aufgrund der dabei resultierenden verkippungsbedingten Phasenverschiebungen auftreten würden.

Die hierzu erforderliche, in Figur 1c lediglich schematisiert angedeutete Umlenkeinheit U kann grundsätzlich auf verschiedenste Art und Weise realisiert werden und umfasst hierzu ein oder mehrere geeignet ausgelegte optische Bauelemente, die wiederum als refraktive oder diffraktive optische Elemente ausgebildet sein können. Im Beispiel der Figur 1c üben die nicht näher gezeigten optischen Bauelemente der Umlenkeinheit U hierbei eine konvergierende Wirkung auf das auf den Messreflektor M einfallende divergente Strahlenbündel S_{IN} aus. Wie aus Figur 1c ersichtlich, ist das den Messreflektor M nach der zweiten Reflexion verlassende Strahlenbündel S_{OUT} konvergent; umgekehrt wäre es auch möglich, dass über eine entsprechende Auslegung der Umlenkeinheit ein einfallendes konvergentes Strahlenbündel nach der zweiten Reflexion am Messreflektor divergent weiter verläuft. Analoge Überlegungen gelten selbstverständlich auch für lediglich teildivergente bzw. teilkonvergente, einfallende Strahlenbündel und deren Umwandlung in teilkonvergente bzw. teildivergente ausfallende Strahlenbündel.

Im erläuterten ersten Ausführungsbeispiel der Figuren 1a, 1b umfasst die Umlenkeinheit 16 als entsprechend diffraktive optische Elemente die beiden Umlenkgitter 15.1, 15.2, jeweils ausgebildet als Transmissionsgitter mit den oben beschriebenen optischen Funktionalitäten.

Alternativ hierzu kann die Umlenkeinheit natürlich auch noch andere optische Elemente umfassen, die eine entsprechende Kompensationswirkung auf das durchlaufende Strahlenbündel ausüben. So kann etwa im Fall eines einfallenden divergenten Strahlenbündel eine Sammellinse oder im Fall eines einfallenden konvergenten Strahlenbündels eine Zerstreuungslinse als geeignetes refraktives optisches Element in der Umlenkeinheit zum Einsatz kommen. Ebenso möglich wäre jeweils die Verwendung geeignet ausgelegter, gechirpter Transmissionsgitter sowie die Kombination derartiger optischer Elemente.

Neben der erläuterten Reduzierung der Verkippempfindlichkeit um eine Verkippachse parallel zur y-Richtung ist es durch eine geeignete Ausbildung der Umlenkeinheit 16 desweiteren möglich, auch eine Unempfindlichkeit gegenüber einer Messreflektor-Verkippung um die zweite Richtung x zu gewährleisten. Hierzu ist im ersten Ausführungsbeispiel vorgesehen, dass durch das erste Umlenkgitter 15.1 eine Fokussierung des darauf einfallenden Strahlenbündels in der xy-Ebene sowie eine Rekollimation in dieser Ebene durch das zweite Umlenkgitter 15.2 erfolgt, wie dies etwa in Figur 1b ersichtlich ist. Durch die entsprechende Ausbildung des ersten und zweiten Umlenkgitters 15.1, 15.2 in der Umlenkeinheit 16 ist somit weiterhin sichergestellt, dass bei einer eventuellen Verkippung des Messreflektors 1 um eine sich in x-Richtung erstreckende Verkippachse das auf die Detektoranordnung 18 auftreffende Strahlenbündel sich kaum entlang der y-Richtung verschiebt. Das erzeugte Referenzsignal S_{R} bleibt damit auch bei einer solchen Verkippung des Messreflektors 1 in linearer Ordnung unbeeinflusst. Über die entsprechende Auslegung der Umlenkeinheit 16 kann somit auch die Verkippempfindlichkeit bzgl. weiterer Verkippachsen minimiert werden.

Als ferner vorteilhaft in Bezug auf eventuelle Verkippungen des Messreflektors um die x- oder y-Richtung erweist sich, wenn die zur Erzeugung des Referenzsignals vorgesehene, erfindungsgemäße Abtastung denselben effektiven Messpunkt in der xy-Ebene aufweist wie die - nicht in den Figuren gezeigte - Abtastung zur Erzeugung der Inkrementalsignale. Hierbei liegt der effektive Messpunkt beider Abtastungen in der xy-Ebene vorzugsweise mittig zwischen den beiden Auftreffpunkten A1 und A2 des Strahlenbündels zur Referenzsignalerzeugung. Dadurch lässt sich ein eventueller Versatz des Referenzsignals S_{R} gegenüber den erzeugten Inkrementalsignalen bei einer Messreflektor-Verkippung vermeiden, der ansonsten Fehler bei der Positionsbestimmung zur Folge haben könnte.

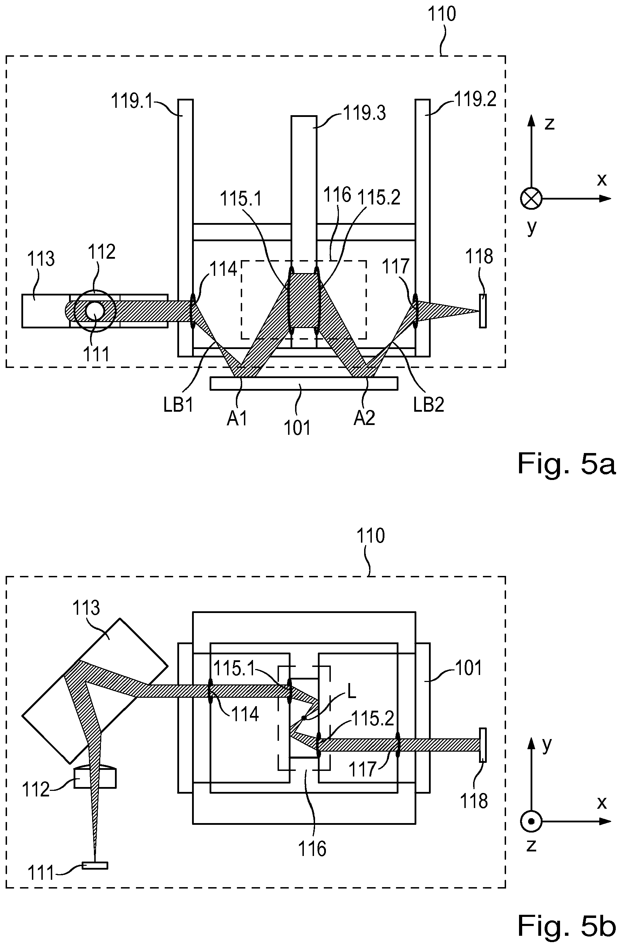

Anhand der Figuren 5a und 5b sei nachfolgend eine zweite Ausführungsform der erfindungsgemäßen Vorrichtung beschrieben. Analog zum ersten Ausführungsbeispiel zeigen diese beiden Figuren jeweils eine schematisierte Darstellung des Strahlengangs zur Referenzsignal-Erzeugung in unterschiedlichen Ansichten. Im Folgenden werden lediglich die maßgeblichen Unterschiede zum ersten Ausführungsbeispiel erläutert.

Insbesondere ist hier eine andere Auslegung der beiden durchlaufenen Transmissionsgitter 114, 117 sowie der Umlenkgitter 115.1, 115.2 der Umlenkeinheit 116 als im ersten Ausführungsbeispiel vorgesehen. Während im ersten Ausführungsbeispiel das eingesetzte erste Transmissionsgitter eine Zylinderlinsenfunktion mit negativer Brennweite besaß, ist nunmehr seitens des ersten Transmissionsgitters 114 im Strahlengang eine Zylinderlinsenfunktion mit positiver Brennweite vorgesehen. Dadurch wird die Lichtquelle 111 über das erste Transmissionsgitter 114 auf einen ersten Bildpunkt LB1 abgebildet, der sich zwischen dem ersten Transmissionsgitter 114 und dem dritten Trägerelement 119.3 befindet. Vom ersten Bildpunkt LB1 propagiert ein divergentes Strahlenbündel über den ersten Auftreffpunkt A1 auf dem Messreflektor 101 in Richtung des dritten Trägerelements 119.3. Auf dessen, dem ersten Transmissionsgitter 114 zugewandten Seite ist das erste Umlenkgitter 115.1 angeordnet, das wiederum eine Zylinderlinsenfunktion in der xz-Ebene aufweist, über die das Strahlenbündel in der xz-Ebene kollimiert wird, in der xy-Ebene aber eine Fokussierung auf den linienförmigen Fokus L erfährt. Die Brennweite des ersten Umlenkgitter 115.1 muss bzgl. der Zylinderlinsenfunktion dementsprechend kürzer sein als in der ersten Ausführungsform. Symmetrisch zum linienförmigen Fokus L wird die Lichtquelle 111 durch das zweite Umlenkgitter 115.2 in einen zweiten Bildpunkt LB2 abgebildet, der zwischen dem zweiten Umlenkgitter 115.2 und dem zweiten Transmissionsgitter 117 liegt. Das zweite Transmissionsgitter 117 bildet den zweiten Bildpunkt LB2 schließlich auf die Detektoranordnung 118 ab. Durch die Lage der Bildpunkte LB1 und LB2 als unmittelbar benachbart zum dritten Trägerelement 119.3 lässt sich ein deutlich größerer Divergenzwinkel des Strahlenbündels und damit eine deutlich größere Apertur erreichen. Da die größere Apertur des Strahlenbündels entsprechend auch die Flankensteilheit der Signale S1 und S2 erhöht, sind mit Hilfe dieser Ausführungsform Referenzsignale mit noch geringerer Breite realisierbar. Dies ist insbesondere dann vorteilhaft, wenn eine hohe Auflösung bei einer kleinen Signalperiode der Inkrementalsignale gefordert wird und die Breite des erfindungsgemäß erzeugten Referenzsignals S_{R} dieser kleinen Signalperiode entsprechen soll.

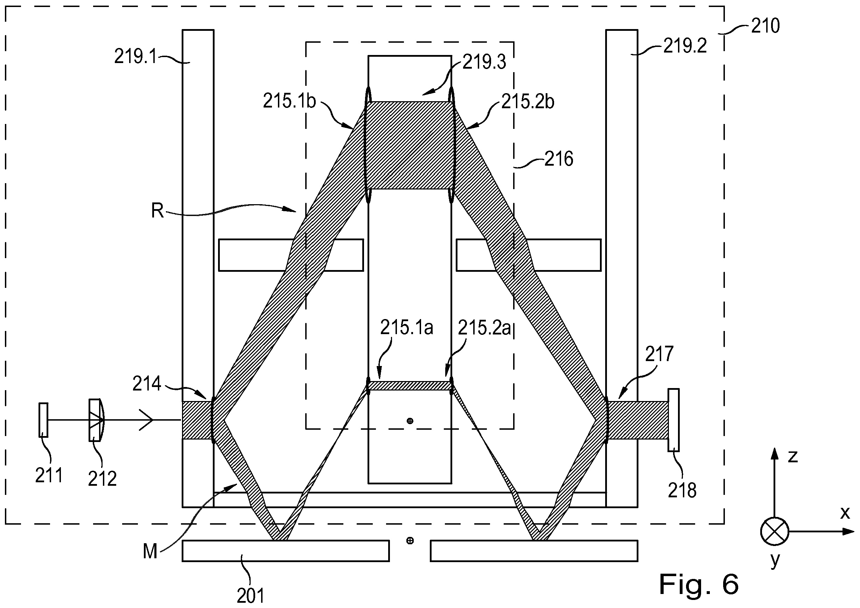

Eine dritte Ausführungsform der erfindungsgemäßen Vorrichtung wird abschließend anhand der Figur 6 erläutert, die eine schematisierte Darstellung des Strahlengangs zur Referenzsignal-Erzeugung zeigt. Wiederum seien nachfolgend lediglich die maßgeblichen Unterschiede zu den vorhergehenden Ausführungsbeispielen erläutert.

Im dritten Ausführungsbeispiel der erfindungsgemäßen Vorrichtung ist nunmehr eine interferentielle Erzeugung des Referenzsignals S_{R} vorgesehen, wozu sog. gechirpte Gitter als Transmissionsgitter eingesetzt werden, nämlich die Gitter mit den Bezugszeichen 214, 215.1a, 215.1b, 215.2a, 215.2b und 217. Bezüglich Details einer solchen Referenzsignalerzeugung ausdrücklich sei auf die EP 513 427 B1 sowie die DE 197 48 802 B4 der Anmelderin verwiesen. Über die Verwendung der gechirpten Gitter ist hier eine besonders hohe räumliche Auflösung in Bezug auf das Referenzsignal S_{R} möglich, d.h. eine sehr geringe Breite des Referenzsignals S_{R}.

Im Unterschied zu den ersten beiden Ausführungsbeispielen, welche auf den optisch abbildenden Eigenschaften der jeweils durchlaufenen Transmissionsgitter basierten, wird im dritten Ausführungsbeispiel das von der Lichtquelle 211 und der Kollimatoroptik 212 her einfallende Strahlenbündel am ersten Transmissionsgitter 214 in ein Messstrahlenbündel M und ein Referenzstrahlenbündel R aufteilt, die zur interferentiellen Erzeugung eines Referenzsignals genutzt werden.

Das erste Transmissionsgitter 214 hat neben der optischen Aufspaltfunktion dabei wie in den vorherigen Ausführungsbeispielen ferner eine Zylinderlinsenfunktion auf die aufgespaltenen Mess- und Referenzstrahlenbündel M, R. Im dargestellten Ausführungsbeispiel der Figur 6 weist das erste Transmissionsgitter 214 dabei sowohl eine positive wie auch eine negative Brennweite auf, nämlich eine positive Brennweite für das Messstrahlenbündel M und eine negative Brennweite für das Referenzstrahlenbündel R. Prinzipiell ist auch eine umgekehrte Zuordnung möglich.

Auf dem mittleren, dritten Trägerelement 219.3 befinden sich jeweils sowohl für das Messstrahlenbündel M als auch für das Referenzstrahlenbündel R erste Umlenkgitter 215.1 a, 215.1 b sowie zweite Umlenkgitter 215.2a, 215.2b in der Umlenkeinheit 216, die die jeweiligen Strahlenbündel M, R in der xz-Ebene wieder kollimieren. Hier nicht dargestellt, aber prinzipiell möglich ist auch hier wieder eine Fokussierung des Mess- und Referenzstrahlenbündels M, R in der yz-Ebene wie in den ersten beiden Ausführungsbeispielen, um dadurch eine Kippkompensation um eine Verkippachse sicherzustellen, die parallel zur x-Richtung orientiert ist.

Nach dem Durchlaufen des dritten Trägerelements 219.3 resultiert ein spiegelsymmetrischer Strahlverlauf des Mess- und Referenzstrahlenbündels M, R in der xz-Ebene bis zur Überlagerung von Mess- und Referenzstrahlbündel M, R auf dem zweiten Transmissionsgitter 217. Das zweite Transmissionsgitter 217 fungiert hier als Vereinigungsgitter, kollimiert beide Strahlenbündel M, R wieder und bringt die +1. und -1. Beugungsordnungen zur Interferenz.

Alternativ zur Nutzung der +/-1. Beugungsordnungen lassen sich auch zwei Signale aus den 0. und 2. Ordnungen erzeugen, die zu einem Referenzsignal weiterverarbeitbar sind.

Das in diesem Ausführungsbeispiel genutzte Messprinzip entspricht demjenigen der Inkrementalsignalerzeugung, wie es in der eingangs erwähnten DE 10 2013 203 211.0 im Detail beschrieben ist. Die gechirpten Strukturen der Transmissionsgitter 214, 215.1a, 215.1b, 215.2a, 215.2b wirken wie eine Überlagerung von Inkrementalabtastungen mit kontinuierlich verteilten Signalperioden mit einer gemeinsamen Null- bzw. Referenzlage. Außerhalb dieser gemeinsamen Nulllage ist die Modulation des Signals stark gedämpft, so dass ein derartiges Signal als Referenzsignal genutzt werden kann.

Neben den erläuterten Ausführungsbeispielen gibt es im Rahmen der vorliegenden Erfindung selbstverständlich noch weitere Ausgestaltungsmöglichkeiten.

## Patentansprüche

1. Vorrichtung zur Positionsbestimmung mit
- einer Lichtquelle (11; 111; 211),
- einem planen Messreflektor (M; 1; 101; 201), der mindestens entlang einer Messrichtung (z) beweglich ist, wobei die Messrichtung (z) senkrecht in Bezug auf die Anordnungsebene des Messreflektors (M; 1; 101; 201) orientiert ist und
- einer Detektoranordnung (18; 118; 218),
- wobei mindestens ein von der Lichtquelle (11; 111; 211) emittiertes Strahlenbündel nach dem Beaufschlagen des Messreflektors (M; 1; 101; 201) auf die Detektoranordnung (18; 118; 218) trifft, so dass im Fall einer Bewegung des Messreflektors (M; 1; 101; 201) entlang der Messrichtung (z) mindestens ein Signal resultiert, das von der Position des Messreflektors (M; 1; 101; 201) abhängt und aus dem ein Referenzsignal (E) an einer definierten Referenzposition erzeugt wird,
**dadurch gekennzeichnet,**
**dass** das Strahlenbündel den Messreflektor (M; 1; 101; 201) zweimal beaufschlagt und zwischen dem Beaufschlagen des Messreflektors (M; 1; 101; 201) eine Umlenkeinheit (U; 16; 116; 216) durchläuft, die derart ausgebildet ist, dass eine durch eine Messreflektorverkippung nach der ersten Reflexion resultierende Strahlrichtungsabweichung des Strahlenbündels nach der zweiten Reflexion kompensiert ist, wobei die Umlenkeinheit (U; 16; 116; 216) ein oder mehrere optische Bauelemente umfasst und derart ausgebildet ist, dass ein unter dem Winkel Θ gegen eine Normale (N) auf den unverkippten Messreflektor (M; 1; 101; 201) erstmalig einfallendes Strahlenbündel (S_{IN}) im Fall einer Verkippung des Messreflektors (M; 1; 101; 201) um eine Verkippachse um den Winkel α nach dem Durchlaufen der Umlenkeinheit (U; 16; 116; 216) unter dem Winkel Θ - 2α gegen die Normale (N) auf den unverkippten Messreflektor (M; 1; 101; 201) ein zweites Mal auf den Messreflektor (M; 1; 101; 201) einfällt.

2. Vorrichtung nach Anspruch 1, **dadurch gekennzeichnet, dass** die Umlenkeinheit (U; 16; 116; 216) ein oder mehrere optische Bauelemente umfasst, die
- entweder auf ein auf den Messreflektor (M; 1; 101; 201) einfallendes divergentes Strahlenbündel (S_{IN}) eine konvergierende optische Wirkung ausüben oder
- auf ein auf den Messreflektor (M: 1; 101; 201) einfallendes konvergentes Strahlenbündel (S_{IN}) eine divergierende optische Wirkung ausüben.

3. Vorrichtung nach Anspruch 2, **dadurch gekennzeichnet, dass** das mindestens eine optische Bauelement als refraktives oder diffraktives optisches Element ausgebildet ist.

4. Vorrichtung nach Anspruch 3, **dadurch gekennzeichnet, dass** die Umlenkeinheit (U; 16; 116; 216) als diffraktive optische Elemente ein erstes und ein zweites Umlenkgitter (15.1, 15.2; 115.1, 115.2; 215.1a, 215.1b, 215.2a, 215.2b) umfasst.

5. Vorrichtung nach Anspruch 1, **dadurch gekennzeichnet, dass** die Umlenkeinheit (U; 16; 116; 216) ein oder mehrere optische Bauelemente umfasst und derart ausgebildet ist, dass in der Einfallsebene eine spiegelsymmetrische Abbildung des erstmalig auf den Messreflektor (M; 1; 101; 201) einfallenden Strahlenbündels (S_{IN}) auf das vom Messreflektor (M; 1; 101; 201) nach der zweiten Reflexion weg propagierende Strahlenbündel (S_{OUT}) erfolgt.

6. Vorrichtung nach mindestens einem der vorhergehenden Ansprüche, **dadurch gekennzeichnet, dass** entlang des Strahlengangs des Strahlenbündels zwischen der Lichtquelle (11; 111; 211) und der Umlenkeinheit (U; 16; 116; 216) ein erstes Transmissionsgitter (14; 114; 214) angeordnet ist und zwischen der Umlenkeinheit (U; 16; 116; 216) und der Detektoranordnung (18; 118; 218) ein zweites Transmissionsgitter (17; 117; 217) angeordnet ist.

7. Vorrichtung nach Anspruch 6, **dadurch gekennzeichnet, dass** die beiden Transmissionsgitter (14; 114; 214; 17; 117; 217) die Umlenkeinheit (U; 16; 116; 216) und der Messreflektor (M; 1; 101; 201) derart relativ zueinander angeordnet sind, dass das Strahlenbündel zwischen dem Durchlaufen des ersten und zweiten Transmissionsgitters (14; 114; 214; 17; 117; 217) den Messreflektor (M; 1; 101; 201) an zwei Auftrefforten (A1, A2) beaufschlagt, welche entlang einer ersten Richtung (x) voneinander beabstandet sind, die parallel zur Einfallsrichtung des Strahlenbündels auf das erste Transmissionsgitter (14; 114; 214) orientiert ist.

8. Vorrichtung nach Anspruch 6, **dadurch gekennzeichnet, dass** die Lichtquelle (11; 111; 211), die Transmissionsgitter (14; 114; 214; 17; 117; 217), die Umlenkeinheit (U; 16; 116; 216) und die Detektoranordnung (18; 118; 218) in einer Abtasteinheit (10; 110; 210) angeordnet sind, die gegenüber dem Messreflektor (M; 1; 101; 201) entlang der Messrichtung (z) beweglich angeordnet ist.

9. Vorrichtung nach Anspruch 4 und 6, **dadurch gekennzeichnet, dass** die Transmissionsgitter (14; 114; 214; 17; 117; 217) in der Abtasteinheit (10; 110; 210) an orthogonal zum Messreflektor (M; 1; 101; 201) orientierten Trägerelementen (19.1, 19,2; 119.1, 119.2; 219.1, 219.2) angeordnet sind, wobei
- das erste Transmissionsgitter (14; 114; 214) an einem ersten Trägerelement (19,1; 119.1; 219.1) angeordnet ist,
- das zweite Transmissionsgitter (17; 117; 217) an einem zweiten Trägerelement (19.2; 119.2; 219.2) angeordnet ist und
- die beiden Umlenkgitter (15.1, 15.2; 115.1, 115.2; 215.1a, 215.1b, 215.2a, 215.2b) auf den gegenüberliegenden Seiten eines transparenten dritten Trägerelements (19.3; 119.3; 219.3) angeordnet sind, das plattenförmig ausgebildet und zwischen dem ersten und zweiten Trägerelement (19.1, 19.2; 119.1, 119.2; 219.1, 219.2) angeordnet ist.

10. Vorrichtung nach Anspruch 6, **dadurch gekennzeichnet, dass**
- das von der Lichtquelle (11; 111) emittierte Strahlenbündel über das erste Transmissionsgitter (14; 114) ein erstes Mal in Richtung des Messreflektors (M; 1; 101) umgelenkt wird,
- am Messreflektor (M; 1; 101) eine Reflexion des Strahlenbündels in Richtung der Umlenkeinheit (U; 16; 116) erfolgt,
- über die Umlenkeinheit (U; 16; 116) das Strahlenbündel ein zweites Mal in Richtung des Messreflektors (M; 1; 101) umgelenkt wird,
- am Messreflektor (M; 1; 101) eine Reflexion des Strahlenbündels in Richtung des zweiten Transmissionsgitters (17; 117) erfolgt und
- über das zweite Transmissionsgitter (17; 117) eine Umlenkung des Strahlenbündels in Richtung der Detektoranordnung (18; 118) erfolgt.

11. Vorrichtung nach Anspruch 7 und 10, **dadurch gekennzeichnet, dass**
- das erste Transmissionsgitter (14) ferner derart ausgebildet ist, dass das darauf einfallende kollimierte Strahlenbündel in ein Strahlenbündel überführt wird, das in einer xz-Ebene, die durch die erste Richtung (x) und die Messrichtung (z) aufgespannt wird, divergent ist und
- das erste Umlenkgitter (15.1) ferner derart ausgebildet ist, dass das darauf einfallende Strahlenbündel
- in der xz-Ebene kollimiert wird,
- in einer xy-Ebene, die durch die erste Richtung (x) und eine hierzu senkrechte zweite Richtung (y) aufgespannt wird, eine Ablenkung erfährt und
- in der xy-Ebene auf einen linienförmigen Fokus (L) fokussiert wird, der sich mittig in der Umlenkeinheit (U; 16) zwischen dem ersten und dem zweiten Umlenkgitter (15.1, 15.2) befindet und parallel zur Messrichtung (z) erstreckt und
- das zweite Umlenkgitter (15.2) ferner derart ausgebildet ist, dass das darauf einfallende Strahlenbündel
- in der xz-Ebene eine Ablenkung erfährt,
- in der xz-Ebene in ein konvergierendes Strahlenbündel überführt wird und
- in der xy-Ebene kollimiert wird,
- das zweite Transmissionsgitter (17) ferner derart ausgebildet ist, dass die die mittlere Strahlrichtung des darauf einfallenden Strahlenbündels parallel zu einer Normalen auf die Transmissionsgitter (14, 17) ausgerichtet wird.

12. Vorrichtung nach Anspruch 7 und 10, **dadurch gekennzeichnet, dass**
- das erste Transmissionsgitter (114) ferner derart ausgebildet ist, dass das darauf einfallende kollimierte Strahlenbündel in einer xz-Ebene, die durch die erste Richtung (x) und die Messrichtung (z) aufgespannt wird, die Lichtquelle (111) auf einen ersten Bildpunkt (LB1) abbildet, der zwischen dem ersten Transmissionsgitter (114) und dem Messreflektor (M; 101) liegt, so dass ein in der xz-Ebene divergierendes Strahlenbündel auf das erste Umlenkgitter (115.1) einfällt,
- das erste Umlenkgitter (115.1) ferner derart ausgebildet ist, dass das darauf einfallende Strahlenbündel
- in der xz-Ebene kollimiert wird,
- in einer xy-Ebene, die durch die erste Richtung (x) und eine hierzu senkrechte zweite Richtung (y) aufgespannt wird, eine Ablenkung erfährt und
- in der xy-Ebene auf einen linienförmigen Fokus fokussiert wird, der sich mittig in der Umlenkeinheit (U; 116) zwischen dem ersten und zweiten Umlenkgitter (115.1, 115.2) befindet und parallel zur Messrichtung (z) erstreckt und
- das zweite Umlenkgitter (115.2) ferner derart ausgebildet ist, dass das darauf einfallende Strahlenbündel
- in der xz-Ebene eine Ablenkung erfährt,
- in der xz-Ebene die Lichtquelle (111) auf einen zweiten Bildpunkt (LB2) zwischen dem Messreflektor (M; 101) und dem zweiten Transmissionsgitter (117) abbildet, so dass ein in der xz-Ebene divergierendes Strahlenbündel auf das zweite Transmissionsgitter (117) einfällt und
- in der xy-Ebene kollimiert wird,
- das zweite Transmissionsgitter (117) ferner derart ausgebildet ist, dass darüber eine Abbildung des zweiten Bildpunkts (LB2) in eine Detektionsebene der Detektoranordnung (118) erfolgt.

13. Vorrichtung nach Anspruch 6, **dadurch gekennzeichnet, dass** das erste Transmissionsgitter (214) derart ausgebildet ist, dass darüber eine Abspaltung eines Referenzstrahlenbündels (R) erfolgt, welches am zweiten Transmissionsgitter (217) mit demjenigen Strahlenbündel (M) zur interferierenden Überlagerung gebracht wird, das zweimal den Messreflektor (201) beaufschlagt.

14. Vorrichtung nach Anspruch 4 oder 6, **dadurch gekennzeichnet, dass** die Transmissionsgitter (14; 114; 214; 17; 117; 217) und/oder die Umlenkgitter (15.1, 15.2; 115.1, 115.2; 215.1a, 215.1b, 215.2a, 215.2b) als geblazte Gitter ausgebildet sind.

## Claims

1. Apparatus for determining a position, comprising
- a light source (11; 111; 211),
- a planar measurement reflector (M; 1; 101; 201) which is movable at least along a measurement direction (z), wherein the measurement direction (z) is oriented perpendicular to the arrangement plane of the measurement reflector (M; 1; 101; 201), and
- a detector arrangement (18; 118; 218),
- wherein at least one beam emitted by the light source (11; 111; 211) is incident on the detector arrangement (18; 118; 218) after impinging on the measurement reflector (M; 1; 101; 201) such that at least one signal results in the case of a movement of the measurement reflector (M; 1; 101; 201) along the measurement direction (z), said signal depending on the position of the measurement reflector (M; 1; 101; 201) and a reference signal (E) at a defined reference position being generated from said signal,
**characterized**
**in that** the beam impinges twice on the measurement reflector (M; 1; 101; 201) and passes through a deflection unit (U; 16; 116; 216) between impingements on the measurement reflector (M; 1; 101; 201), said deflection unit being embodied in such a way that a beam direction deviation of the beam after the first reflection emerging from a measurement reflector tilt is compensated after the second reflection, wherein the deflection unit (U; 16; 116; 216) comprises one or more optical components and is embodied in such a way that, in the case of a tilt of the measurement reflector (M; 1; 101; 201) about a tilt axis about the angle α, a beam (S_{IN}) incident for the first time at an angle θ in relation to a normal (N) on the non-tilted measurement reflector (M; 1; 101; 201) is incident a second time on the measurement reflector (M; 1; 101; 201) at an angle Θ - 2α in relation to the normal (N) of the non-tilted measurement reflector (M; 1; 101; 201) after passing through the deflection unit (U; 16; 116; 216).

2. Apparatus according to Claim 1, **characterized in that** the deflection unit (U; 16; 116; 216) comprises one or more optical components which
- either exert a converging optical effect on a diverging beam (S_{IN}) incident on the measurement reflector (M; 1; 101; 201) or
- exert a diverging optical effect on a converging beam (S_{IN}) incident on the measurement reflector (M; 1: 101; 201).

3. Apparatus according to Claim 2, **characterized in that** the at least one optical component is embodied as a refractive or diffractive optical element.

4. Apparatus according to Claim 3, **characterized in that** the deflection unit (U; 16; 116; 216) comprises a first and a second deflection grating (15.1, 15.2; 115.1, 115.2; 215.1a, 215.1b, 215.2a, 215.2b) as diffractive optical elements.

5. Apparatus according to Claim 1, **characterized in that** the deflection unit (U; 16; 116; 216) comprises one or more optical components and is embodied in such a way that, in the plane of incidence, there is mirror-symmetric imaging of the beam (S_{IN}) incident for the first time on the measurement reflector (M; 1; 101; 201) onto the beam (S_{OUT}) propagating away from the measurement reflector (M; 1; 101; 201) after the second reflection.

6. Apparatus according to at least one of the preceding claims, **characterized in that**, along the beam path of the beam, a first transmission grating (14; 114; 214) is arranged between the light source (11; 111; 211) and the deflection unit (U; 16; 116; 216) and a second transmission grating (17; 117; 217) is arranged between the deflection unit (U; 16; 116; 216) and the detector arrangement (18: 118; 218).

7. Apparatus according to Claim 6, **characterized in that** the two transmission gratings (14; 114; 214; 17; 117; 217), the deflection unit (U; 16; 116; 216) and the measurement reflector (M; 1; 101; 201) are arranged relative to one another in such a way that the beam impinges the measurement reflector (M; 1; 101; 201) at two impact locations (A1, A2) between passing through the first transmission grating (14; 114; 214) and the second transmission grating (17; 117; 217), said impact locations being spaced apart from one another along a first direction (x) which is oriented parallel to the direction of incidence of the beam onto the first transmission grating (14; 114; 214).

8. Apparatus according to Claim 6, **characterized in that** the light source (11; 111; 211), the transmission gratings (14; 114; 214; 17; 117; 217), the deflection unit (U; 16; 116; 216) and the detector arrangement (18; 118; 218) are arranged in a scanning unit (10; 110; 210) which is movably arranged along the measurement direction (z) in relation to the measurement reflector (M; 1; 101; 201).

9. Apparatus according to Claims 4 and 6, **characterized in that**, in the scanning unit (10; 110; 210), the transmission gratings (14; 114; 214; 17; 117; 217) are arranged on carrier elements (19.1, 19.2; 119.1, 119.2; 219.1, 219.2) oriented orthogonally with respect to the measurement reflector (M; 1; 101; 201), wherein - the first transmission grating (14; 114; 214) is arranged on a first carrier element (19.1; 119.1; 219.1),
- the second transmission grating (17; 117; 217) is arranged on a second carrier element (19.2; 119.2; 219.2) and
- the two deflection gratings (15.1, 15.2; 115.1, 115.2; 215.1a, 215.1b, 215.2a, 215.2b) are arranged on the opposite sides of a transparent third carrier element (19.3; 119.3; 219.3), which has a plate-shaped embodiment and is arranged between the first and second carrier elements (19.1, 19.2; 119.1, 119.2; 219.1, 219.2).

10. Apparatus according to Claim 6, **characterized in that**
- the beam emitted by the light source (11; 111) is deflected a first time in the direction of the measurement reflector (M; 1; 101) by way of the first transmission grating (14; 114),
- there is a reflection of the beam in the direction of the deflection unit (U; 16; 116) at the measurement reflector (M; 1; 101),
- the beam is deflected a second time in the direction of the measurement reflector (M; 1; 101) by way of the deflection unit (U; 16; 116),
- there is a reflection of the beam in the direction of the second transmission grating (17; 117) at the measurement reflector (M; 1; 101) and
- there is a deflection of the beam in the direction of the detector arrangement (18; 118) by way of the second transmission grating (17; 117).

11. Apparatus according to Claims 7 and 10, **characterized in that**
- the first transmission grating (14) is furthermore embodied in such a way that the collimated beam incident thereon is converted into a beam which is divergent in an xz-plane, which is spanned by the first direction (x) and the measurement direction (z), and
- the first deflection grating (15.1) is furthermore embodied in such a way that the beam incident thereon
- is collimated in the xz-plane,
- experiences a deflection in an xy-plane, which is spanned by the first direction (x) and a second direction (y) perpendicular thereto, and
- is focussed in the xy-plane onto a line-shaped focus (L) which is situated centrally in the deflection unit (U; 16) between the first deflection grating (15.1) and the second deflection grating (15.2) and extends parallel to the measurement direction (z), and
- the second deflection grating (15.2) is furthermore embodied in such a way that the beam incident thereon
- experiences a deflection in the xz-plane,
- is converted into a convergent beam in the xz-plane and
- is collimated in the xy-plane,
- the second transmission grating (17) is furthermore embodied in such a way that the mean beam direction of the beam incident thereon is aligned parallel to a normal on the transmission gratings (14, 17).

12. Apparatus according to Claims 7 and 10, **characterized in that**
- the first transmission grating (114) is furthermore embodied in such a way that, in an xz-plane, which is spanned by the first direction (x) and the measurement direction (z), the collimated beam incident on said grating images the light source (111) on a first image point (LB1) which lies between the first transmission grating (114) and the measurement reflector (M; 101) such that a beam which is divergent in the xz-plane is incident on the first deflection grating (115.1),
- the first deflection grating (115.1) is furthermore embodied in such a way that the beam incident thereon
- is collimated in the xz-plane,
- experiences a deflection in an xy-plane, which is spanned by the first direction (x) and a second direction (y) perpendicular thereto, and
- is focussed in the xy-plane onto a line-shaped focus which is situated centrally in the deflection unit (U; 116) between the first deflection grating (115.1) and the second deflection grating (115.2) and extends parallel to the measurement direction (z), and
- the second deflection grating (115.2) is furthermore embodied in such a way that the beam incident thereon
- experiences a deflection in the xz-plane,
- images, in the xz-plane, the light source (111) onto a second image point (LB2) between the measurement reflector (M; 101) and the second transmission grating (117) such that a beam diverging in the xz-plane is incident on the second transmission grating (117) and
- is collimated in the xy-plane,
- the second transmission grating (117) is furthermore embodied in such a way that, by means thereof, there is imaging of the second image point (LB2) into a detection plane of the detector arrangement (118).

13. Apparatus according to Claim 6, **characterized in that** the first transmission grating (214) is embodied in such a way that, by means thereof, a reference beam (R) is split-off, said reference beam being brought into interfering superposition at the second transmission grating (217) with the beam (M) which impinges twice on the measurement reflector (201).

14. Apparatus according to Claim 4 or 6, **characterized in that** the transmission gratings (14; 114; 214; 17; 117; 217) and/or the deflection gratings (15.1, 15.2; 115.1, 115.2; 215.1a, 215.1b, 215.2a, 215.2b) are embodied as blazed gratings.

## Revendications

1. Dispositif de détermination de position comportant
- une source lumineuse (11 ; 111 ; 211),
- un réflecteur de mesure plan (M ; 1 ; 101 ; 201) qui est mobile au moins le long d'une direction de mesure (z), dans lequel la direction de mesure (z) est orientée perpendiculairement au plan d'agencement du réflecteur de mesure (M ; 1 ; 101 ; 201) et
- un système de détecteur (18 ; 118 ; 218),
- dans lequel au moins l'un des faisceaux émis par la source lumineuse (11 ; 111 ; 211) après incidence sur le réflecteur de mesure (M ; 1 ; 101 ; 201) est incident sur le système de détecteur (18 ; 118 ; 218) de manière à ce que, dans le cas d'un mouvement du réflecteur de mesure (M ; 1 ; 101 ; 201) le long de la direction de mesure (z), il en résulte au moins un signal qui dépend de la position du réflecteur de mesure (M ; 1 ; 101 ; 201) et à partir duquel un signal de référence (E) est généré à une position de référence définie,
**caractérisé en ce que** le faisceau est incident deux fois sur le réflecteur de mesure (M ; 1 ; 101 ; 201) et, entre les incidences sur le réflecteur de mesure (M ; 1 ; 101 ; 201), passe à travers une unité de déviation (U ; 16 ; 116 ; 216) qui est réalisée de manière à ce qu'un écart de direction du faisceau qui résulte d'une inclinaison du réflecteur de mesure après la première réflexion soit compensé après la deuxième
réflexion, dans lequel l'unité de déviation (U ; 16 ; 116 ; 216) comprend un ou plusieurs composants optiques et est réalisée de manière à ce qu'un faisceau (S_{IN}) incident une première fois sous l'angle Θ par rapport à une normale (N) au réflecteur de mesure non incliné (M ; 1 ; 101 ; 201), soit incident une deuxième fois sur le réflecteur de mesure (M ; 1 ; 101 ; 201) sous l'angle Θ - 2α par rapport à la normale (N) au réflecteur de mesure non incliné (M ; 1 ; 101 ; 201), dans le cas où le réflecteur de mesure (M ; 1 ; 101 ; 201) est incliné de l'angle α autour d'un axe d'inclinaison, après le passade à travers l'unité de déviation (U ; 16 ; 116 ; 216).

2. Dispositif selon la revendication 1, **caractérisé en ce que** l'unité de déviation (U ; 16 ; 116 ; 216) comprend un ou plusieurs composants optiques qui
- soit produisent sur un faisceau divergent (S_{IN}) incident sur le réflecteur de mesure (M ; 1 ; 101 ; 201) un effet optique convergent,
- soit produisent sur un faisceau convergent (S_{IN}) incident sur le réflecteur de mesure (M ; 1 ; 101 ; 201) un effet optique divergent.

3. Dispositif selon la revendication 2, **caractérisé en ce qu'**au moins une composant optique est réalisé sous la forme d'un élément optique réfractant ou diffractant.

4. Dispositif selon la revendication 3, **caractérisé en ce que** l'unité de déviation (U ; 16 ; 116 ; 216) comprend, en tant qu'élément optique diffractant, un premier et un deuxième réseau de déviation (15.1, 15.2 ; 115.1, 115.2 ; 215.1a, 215.1b, 215.2a, 215.2b).

5. Dispositif selon la revendication 1, **caractérisé en ce que** l'unité de déviation (U ; 16 ; 116 ; 216) comprend un ou plusieurs composants optiques et est réalisée de manière à ce qu'il se produise dans le plan d'incidence une formation d'image symétrique dans un miroir du faisceau (S_{IN}) incident une première fois sur le réflecteur de mesure (M ; 1 ; 101 ; 201) sur le faisceau (S_{OUT}) se propageant depuis le réflecteur de mesure (M ; 1 ; 101 ; 201) après la deuxième réflexion.

6. Dispositif selon au moins l'une des revendications précédentes, **caractérisé en ce qu'**un premier réseau de transmission (14 ; 114 ; 214) est disposé le long du chemin optique du faisceau entre la source lumineuse (11 ; 111 ; 211) et l'unité de déviation (U ; 16 ; 116 ; 216) et **en ce qu'**un deuxième réseau de transmission (17 ; 117 ; 217) est disposé entre l'unité de déviation (U ; 16 ; 116 ; 216) et le système de détecteur (18 ; 118 ; 218).

7. Dispositif selon la revendication 6, **caractérisé en ce que** les deux réseaux de transmission (14 ; 114 ; 214 ; 17 ; 117 ; 217), l'unité de déviation (U ; 16 ; 116 ; 216) et le réflecteur de mesure (M ; 1 ; 101 ; 201) sont disposés l'un par rapport à l'autre de manière à ce que le faisceau soit incident sur le réflecteur de mesure (M ; 1 ; 101 ; 201) entre les passages à travers les premier et deuxième réseaux de transmission (14 : 114 ; 214 ; 17 ; 117 ; 217), en deux points d'incidence (A1, A2) qui sont espacés l'un de l'autre le long d'une première direction (x), qui est orientée parallèlement à la direction d'incidence du faisceau sur le premier réseau de transmission (14 ; 114 ; 214).

8. Dispositif selon la revendication 6, **caractérisé en ce que** la source lumineuse (11 ; 111 ; 211), le réseau de transmission (14 ; 111 ; 214 ; 17 ; 117 ; 217), l'unité de déviation (U ; 16 ; 116 ; 216) et le système de détecteur (18 ; 118 ; 218) sont disposés dans une unité de balayage (10 ; 110 ; 210) qui est disposée de manière mobile le long de la direction de mesure (z) par rapport au réflecteur de mesure (M ; 1 ; 101 ; 201).

9. Dispositif selon les revendications 4 et 6, **caractérisé en ce que** les réseaux de transmission (14 ; 114 ; 214 ; 17 ; 117 ; 217) sont disposés dans l'unité de balayage (10 ; 110 ; 210) sur des éléments de support (19.1, 19.2; 119.1, 119.2 ; 219.1, 219.2) orientées de manière orthogonale au réflecteur de mesure (M ; 1 ; 101 ; 201), dans lequel
- le premier réseau de transmission (14 ; 114 ; 214) est disposé sur un premier élément de support (19.1 ; 119.1 ; 219.1),
- le deuxième réseau de transmission (17 ; 117 ; 217) est disposé sur un deuxième élément de support (19.2 ; 119.2 ; 219.2) et
- les deux réseaux de déviation (15.1, 15.2 ; 115.1, 115.2 ; 215.1a, 215.1b, 215.2a, 215.2b) sont disposés sur les côtés opposés d'un troisième élément de support transparent (19.3 ; 119.3 ; 219.3) qui est réalisé sous forme de plaque et est disposé entre les premier et deuxième éléments de support (19.1, 19.2 ; 119.1, 119.2 ; 219.1, 219.2).

10. Dispositif selon la revendication 6, **caractérisé en ce que**
- le faisceau émis par la source lumineuse (11 ; 111) est dévié une première fois dans la direction du réflecteur de mesure (M ; 1 ; 101) par l'intermédiaire du premier réseau de transmission (14 ; 114),
- une réflexion du faisceau se produit sur le réflecteur de mesure (M ; 1 ; 101) dans la direction de l'unité de déviation (U ; 16 : 116),
- le faisceau est dévié une deuxième fois dans la direction du réflecteur de mesure (M ; 1 ; 101) par l'intermédiaire de l'unité de déviation (U ; 16 ; 116),
- une réflexion du faisceau se produit sur le réflecteur de mesure (M ; 1 ; 101) dans la direction du deuxième réseau de transmission (17 ; 117) et
- une déviation du faisceau se produit dans la direction du système de détecteur (18 ; 118) par l'intermédiaire du deuxième réseau de transmission (17 ; 117).

11. Dispositif selon les revendications 7 et 10, **caractérisé en ce que**
- le premier réseau de transmission (14) est en outre réalisé de manière à ce que le faisceau collimaté incident sur celui-ci soit transféré dans un faisceau qui est divergent dans un plan xz, qui est sous-tendu par la première direction (x) et la direction de mesure (z), et
- le premier réseau de déviation (15.1) est en outre réalisé de manière à ce que le faisceau incident sur celui-ci
- soit collimaté dans le plan xz,
- subisse une déviation dans un plan xy qui est sous-tendu par la première direction (x) et une deuxième direction (y) perpendiculaire à celle-ci, et
- soit focalisé dans le plan xy sur un foyer de forme linéaire (L) qui se trouve au centre de l'unité de déviation (U ; 16) entre les premier et deuxième réseaux de déviation (15.1, 15.2) et s'étend parallèlement à la direction de mesure (z) et
- le deuxième réseau de déviation (15.2) est en outre réalisé de manière à ce que le faisceau incident sur celui-ci
- subisse une déviation dans le plan xz,
- soit transféré dans le plan xz dans un faisceau convergent et
- soit collimaté dans le plan xy,
- le deuxième réseau de transmission (17) est en outre réalisé de manière à ce que la direction de rayonnement moyenne du faisceau incident sur celui-ci soit orientée parallèlement à une normale aux réseaux de transmission (14, 17).

12. Dispositif selon les revendications 7 et 10, **caractérisé en ce que**
- le premier réseau de transmission (114) est en outre réalisé de manière à ce que le faisceau collimaté incident sur celui-ci forme l'image dans un plan xz, qui est sous-tendu par la première direction (x) et la direction de mesure (z), de la source lumineuse (111) sur un premier pixel (LB1) qui se situe entre le premier réseau de transmission (114) et le réflecteur de mesure (M ; 101) de manière à ce qu'un faisceau divergent dans le plan xz soit incident sur le premier réseau de déviation (115.1),
- le premier réseau de déviation (115.1) est en outre réalisé de manière à ce que le faisceau incident sur celui-ci
- soit collimaté dans le plan xz,
- subisse une déviation dans un plan xy qui est sous-tendu par la première direction (x) et une deuxième direction (y) perpendiculaire à celle-ci, et
- soit focalisé dans le plan xy sur un foyer de forme linéaire qui se trouve au centre de l'unité de déviation (U ; 116) entre les premier et deuxième réseaux de déviation (115.1, 115.2) et s'étend parallèlement à la direction de mesure (z) et
- le deuxième réseau de déviation (115.2) est en outre réalisé de manière à ce que le faisceau incident sur celui-ci
- subisse une déviation dans le plan xz,
- forme l'image de la source lumineuse (111) dans le plan xz sur un deuxième pixel (LB2) entre le réflecteur de mesure (M ; 101) et le deuxième réseau de transmission (117) de manière à ce qu'un faisceau divergent dans le plan xz soit incident sur le deuxième réseau de transmission (117) et
- soit collimaté dans le plan xy,
- le deuxième réseau de transmission (117) est en outre réalisé de manière à ce qu'une formation d'image du deuxième pixel (LB2) se produise en outre dans un plan de détection du système de détecteur (118).

13. Dispositif selon la revendication 6, **caractérisé en ce que** le premier réseau de transmission (214) est réalisé de manière à ce qu'il se produise en outre une séparation d'un faisceau de référence (R) superposé au faisceau (M) qui est incident deux fois sur le réflecteur de mesure (201), de manière à interférer avec celui-ci, sur le deuxième réseau de transmission (217).

14. Dispositif selon la revendication 4 ou 6, **caractérisé en ce que** les réseaux de transmission (14 ; 114 ; 214 ; 17 ; 117 ; 217) et/ou les réseaux de déviation (15.1, 15.2 ; 115.1, 115.2 ; 215.1a, 215.1b, 215.2a, 215.2b) sont réalisés sous la forme de réseaux blazés.
